(19)

Europäisches
Patentamt
European
Patent Office
Office européen
des brevets

(11) **EP 3 177 044 A2**

(12) **EUROPEAN PATENT APPLICATION**

(43) Date of publication:
**07.06.2017 Bulletin 2017/23**

(21) Application number: **15200638.3**

(22) Date of filing: **17.12.2015**

(51) Int Cl.:
*H04W 4/02* (2009.01)          *H04W 4/04* (2009.01)
*G06F 17/30* (2006.01)        *G06Q 30/02* (2012.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **03.12.2015 US 201514958907**

(71) Applicant: **Industrial Technology Research
Institute
Chutung Hsinchu 31040 (TW)**

(72) Inventors:
• **Yang Mao, Shys-Fan
302 Hsinchu County (TW)**
• **Peng, Wen-Wei
204 Keelung City (TW)**
• **Chiu, Yen-Chang
350 Miaoli County (TW)**
• **Lin, Hsien-Chang
108 Taipei City (TW)**

(74) Representative: **Becker Kurig Straus
Patentanwälte
Bavariastrasse 7
80336 München (DE)**

(54) **INFORMATION QUERYING METHOD BASED ON USER LOCATION, DEVICE TO DEVICE RELAY GATEWAY SYSTEM AND CONTROLLER**

(57)    The information querying method is provided. The query image is received via a login gateway among the serving gateways. At least one of query description of the query image is generated. At least one first candidate object is sifted from a plurality of candidate objects according to a location of the login gateway and locations of candidate objects, wherein a plurality of candidate descriptions of each of the candidate objects are recorded in a database. The at least one query description of the query image is compared with the candidate descriptions of the at least one first candidate object, so as to obtain the target object from the candidate objects according to similarity level between the at least one query description and the candidate descriptions of the at least one first candidate object.

FIG. 1A

**Description**

TECHNICAL FIELD

The disclosure relates to an information querying method based on user location, a device to device (D2D) relay gateway system and a controller.

BACKGROUND

Generally, in order to publicize merchandise, products or company, the stores usually install print media advertising, such as billboards or signboards popularly set up in public places, for attracting people's attention. For instance, the store name displayed by text and the brand logo displayed by symbol are showed on the signboards of the stores. However, interaction with customers is lacked by using the print media advertising, since the customers merely obtain the brief information about the stores through information propagation with single direction. Hence, the customers are not able to understand the detail information about the stores (such as a brand story of the products, a promotion held by the stores and so on) by seeing the print media advertising.

On the other hand, with development of science and technology, photographing function is normally seeing on a handheld electronic device. Through the photographing function, the customers may control the handheld electronic device to supply different assistance by using the handheld electronic device to capture a photo. For instance, the handheld electronic device may upload the photo to a computing platform via wireless transmission for image recognition, such that the customers may obtain the related service form the service supplier according to an image recognition result of the uploaded photo. In one application scenario, through shooting the signboards of the stores and performing image recognition on the photo, the customers may receive the detail information of the stores or the products via the handheld electronic device. However, since the customers may photograph the signboards of the stores from plenty of different shooting angles or in varied environmental conditions, a huge amount of data transmission and high computing load are inevitable to achieve high accuracy of image recognition. Therefore, the customers may waste a lot of time for waiting the image recognition result.

SUMMARY

Accordingly, the present disclosure provides an information querying method based on user location, a device to device (D2D) relay gateway system and a controller, which build and query an image database according to location of a user, so as to upgrade processing efficiency of inquiring information by using image recognition.

The present disclosure provides an information querying method based on user location, which is adapted to a device to device relay gateway system comprising a plurality of serving gateways and configured to recognize a target object based on a query image. The information querying method includes following steps. The query image is received via a login gateway among the serving gateways. At least one of query description of the query image is generated. At least one first candidate object is sifted from a plurality of candidate objects according to a location of the login gateway and locations of candidate objects, wherein a plurality of candidate descriptions of each of the candidate objects are recorded in a database. The at least one query description of the query image is compared with the candidate descriptions of the at least one first candidate object, so as to obtain the target object from the candidate objects according to similarity level between the at least one query description and the candidate descriptions of the at least one first candidate object.

The present disclosure provides a device to device (D2D) relay gateway system, which comprises a plurality of serving gateways and a controller and configured to recognize a target object based on a query image. The serving gateways are connected with each other to form a network topology based on a wireless communication protocol, and the serving gateways respectively storing a database. The controller is connected to a central gateway among the serving gateways. The controller receives the query image via a login gateway among the serving gateways, and generates at least one query description of the query image. The login gateway sifts at least one first candidate object from a plurality of candidate objects according to a location of the login gateway and locations of candidate objects, wherein a plurality of candidate descriptions of each of the candidate objects are recorded in a database. The serving gateways compare the at least one query description of the query image with the candidate descriptions of the at least one first candidate object, so as to obtain the target object from the candidate objects according to similarity level between the at least one query description and the candidate descriptions of the at least one first candidate object.

The present disclosure provides a controller, which is configured in a D2D relay gateway system comprising a plurality of serving gateways and is connected to a central gateway among the serving gateways. The controller comprises a storage unit and a processing unit. The storage unit stores a plurality of instructions, and the processing unit is connected to the storage unit. The processing unit accesses and executes the instructions to: receive a query image via a login gateway among the serving gateways, and generate at least one query description of the query image;

and group the at least one query description into a plurality of query groups according to a hop count between each of the serving gateways and the central gateway, such that one of the serving gateways compares one of the query groups with the candidate descriptions of the first candidate object.

Based on the above, according to the information querying method based on user location, the D2D relay gateway system and the controller proposed by the present disclosure, the first candidate object is sifted from the first candidate objects based on the location of the user, then the candidate descriptions of the first candidate object is compared with the query description of the query image. Besides, computing loading of image recognition is allocated to the plurality of serving gateways based on the hop count between each of the serving gateways and the central gateway connected to a computing center, such that transmission delay caused by data transmission may be reduced.

To make the above features and advantages of the present disclosure more comprehensible, several embodiments accompanied with drawings are described in detail as follows.

BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

FIG. 1A is a schematic diagram illustrating a network topology of a device to device (D2D) relay gateway system.
FIG. 1B is a schematic diagram illustrating another network topology of a D2D relay gateway system.
FIG. 2 is a schematic diagram illustrating a controller and a serving gateway according to an embodiment of the present disclosure.
FIG. 3 is a flowchart illustrating an offline database building method according to an embodiment of the present disclosure.
FIG. 4 is a flowchart illustrating an information query method based on user location according to an embodiment of the present disclosure.
FIG. 5 is a schematic diagram illustrating setting association between the candidate objects and the serving gateways according to an embodiment of the present disclosure.
FIG. 6 is a flowchart illustrating an information query method based on user location according to an embodiment of the present disclosure.
FIG. 7 is a schematic diagram illustrating a D2D relay gateway system according to an embodiment of the present disclosure.
FIG. 8 is a schematic diagram for querying a target object according to the query image based on the location oriented table according to an embodiment of the present disclosure.
FIG. 9 is a schematic diagram for querying a target object according to the query image based on the location oriented table according to an embodiment of the present disclosure.
FIG. 10 is a schematic diagram for querying a target object according to the query image based on the location oriented table according to an embodiment of the present disclosure.

DESCRIPTION OF THE EMBODIMENTS

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

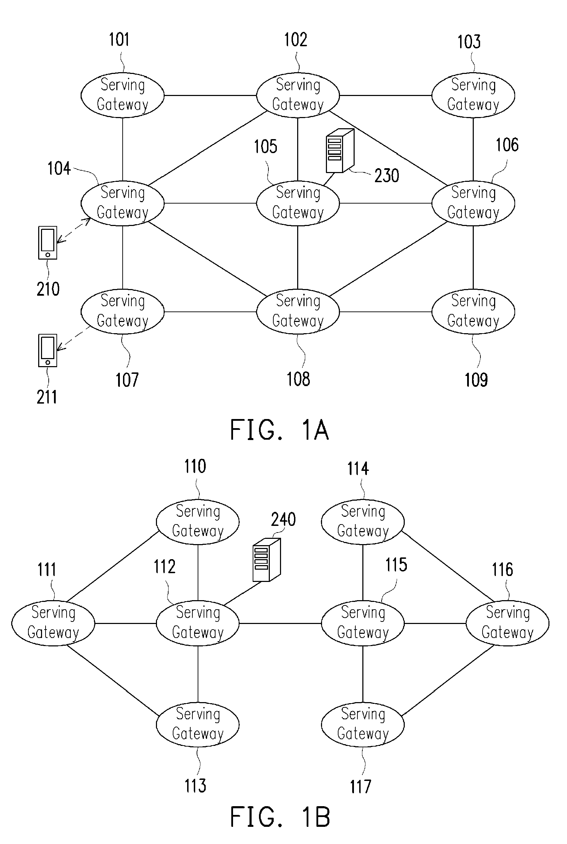

In the disclosure, a device to device (D2D) relay gateway system is configured to recognize a target object based on a query image. The query image is photograph by a user through a user equipment, and text or logos showed on the query image are going to be recognized to identify a target object represented by the text or the logos. FIG. 1A is a schematic diagram illustrating a network topology of a device to device (D2D) relay gateway system. Please referring to FIG. 1A, a D2D relay gateway system 10 includes a plurality of serving gateways, which are serving gateways 101 to 109 (but the disclosure is not limited thereto), and a controller 230. The serving gateways 101 to 109 support at least one wireless communication protocol, and the serving gateways 101 to 109 establish a D2D link with at least one other serving gateway which is near itself. The wireless communication protocol is not limited in the disclosure, which may be a wifi protocol, a Zigbee protocol, a third generation (3G) mobile communications protocol or a LTE protocol, etc.

The serving gateways 101 to 109 are suitable for being disposed in an indoor or an outdoor space, such as a department store, a shopping mall, an exhibition center, an outdoor market, etc. As long as the distance between two serving gateways among the serving gateways 101 to 109 close enough, the two serving gateways may connect with each other base on the wireless communication protocol. Specifically to say, each of the serving gateways 101 to 109 may perform proximity discovery to discover the other serving gateways nearby and then establish D2D connection. Such that, the serving gateways 101 to 109 may form a network topology according to locations of the serving gateways 101 to 109. As one example, the serving gateways 106 may directly communicate with the serving gateways 103, 102, 105, 108, 109 and indirectly communicate with the serving gateways 101, 104, 107 through the serving gateways 103, 102, 105, 108, 109. As another one example, the serving gateways 107 may directly communicate with the serving gateways 104, 108 and indirectly communicate with the serving gateways 101, 102, 103, 105, 106, 109 through the serving gateways 104, 108.

In the disclosure, the serving gateway connected to the controller 230 is regarded as a central gateway. In FIG. 1A, the serving gateway 105 connected to the controller 230 is regarded as a central gateway, but the disclosure is not limited thereto. In another exemplary embodiment, the serving gateway 106 may be regarded as a central gateway as long as the controller 230 is connected to the serving gateway 106. That is to say, even there is only one serving gateway which is connected to the controller, but the other serving gateways may transmit the data to controller 230 for processing based on the network topology. As one example, the serving gateway 107 may use the computing ability of the controller 230 by data transmission on the network topology of the D2D relay gateway system 10.

Furthermore, the serving gateways 101 to 109 may be regarded as an access point for supplying network accessing function to user equipments located within the service range of the serving gateways 101 to 109. As one example, the user equipment 220 may use the computing ability of the controller 230 by accessing the network via the serving gateway 107. In the disclosure, the user equipment 220 may transmit the query image to the controller 230 via the serving gateway 107 and receive the query result from the serving gateway 107. Besides, the user equipment 210 may transmit the query image to the controller 230 via the serving gateway 104 and receive the query result from the serving gateway 104. In other words, the user equipment 220 may login the D2D relay gateway system 10 through the serving gateway 107, which is regarded as a login gateway for the user equipment 220.

As one example, assuming the serving gateways 101 to 109 are installed in a shopping mall, if the customers attend to query more information about a target store in the shopping mall, the customers may photograph the signboard of the target store to obtain the query image. The customers may login the D2D relay gateway system 10 via the login gateway 107 by using the user equipment 211, then the user equipment 211 upload the query image itself or the image descriptions of the query image to the D2D relay gateway system 10. The serving gateways 101 to 109 may query the database by using the query image, so as to recognize the target store from a plurality of candidate stores based on the query image. That is, the target store is regarded as the target object, and the candidate stores are regarded as the candidate object in this case. Once the target store is recognized, the user equipment 211 is able to display more information about the target store to the customers via connecting to the website related to the target store. Therefore, a database configured for recognizing the query image is created in advance, and each of the serving gateways 110 to 117 may store the database to compare the query image with a plurality of reference images photographed in advance.

However, the number of the serving gateways and the pattern of the topology are not limited in the disclosure. For example, FIG. 1B is a schematic diagram illustrating another network topology of a D2D relay gateway system. A D2D relay gateway system 20 includes a plurality of serving gateways 110 to 117 and a controller 240. As one example, the serving gateways 116 may directly communicate with the serving gateways 114, 115, 117 and indirectly communicate with the serving gateways 110, 111, 112, 113 through the serving gateways 114, 115, 117. Since the difference of the number of the serving gateways and the difference of the locations of the serving gateways, the pattern of the network topology of the D2D relay gateway system 20 is different from the network topology of the D2D relay gateway system 10. Besides, the serving gateway 112 connected to the controller is regarded as a central gateway, so the data being transmitted to the controller 240 from the serving gateways 110 to 117 may be forwarded by the service gateway 112.

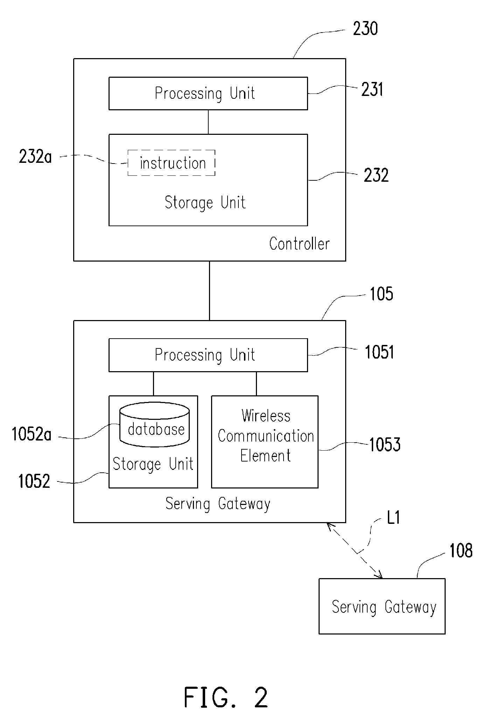

Referring to FIG. 2, FIG. 2 is a schematic diagram illustrating a controller and a serving gateway according to an embodiment of the present disclosure. In the present embodiment, the controller 230 may be regarded as a computing center of the D2D relay gateway system 10, and the controller 230 is connected to the serving gateway 105. However, the controller 230 may be connected to any one of the serving gateways 10 in the D2D relay gateway system 10, and the disclosure is not limited thereto. The controller 230 may include a processing unit 231 and a storage unit 232. The storage unit 232 is, for example, a memory, a hard disk or other devices capable of storing or accessing data, and may be configured to record a plurality of program codes or modules, and data. For instance, the storage unit 232 stores a plurality of instruction 232a, which is able to be executed by the processing unit 231.

The processing unit 231 may be a processor for general purposes, a processor for special purposes, a conventional processor, a data signal processor, a plurality of microprocessors, one or more microprocessors, controllers, microcontrollers and Application Specific Integrated Circuit (ASIC) which are combined with a core of the digital signal processor, a Field Programmable Gate Array (FPGA), any other integrated circuits, a state machine, a processor based on Advanced RISC Machine (ARM) and similar products.

In the other hand, as one example, the serving gateway 105 includes a processing unit 1051, a storage unit 1052 and a wireless connection element 1503. The processing unit 1051 may be a processor for general purposes, a processor for special purposes, a conventional processor, a data signal processor, a plurality of microprocessors, one or more microprocessors, controllers, microcontrollers and Application Specific Integrated Circuit (ASIC) which are combined with a core of the digital signal processor, a Field Programmable Gate Array (FPGA), any other integrated circuits, a state machine, a processor based on Advanced RISC Machine (ARM) and similar products. The storage unit 1052 is, for example, a memory, a hard disk or other devices capable of storing or accessing data, and may be configured to record a plurality of program codes or modules, and data. It should be noted that, the storage unit 1052 stores a database 1052a, which is able to be accessed by the processing unit 1051 and includes a plurality of candidate descriptions of the reference images. Besides, the wireless communication element 1503 supports a wireless communication protocol to establish D2D connection L1 with the serving gateway 108. As one example, the wireless communication element 1503 includes an antenna and a transceiver to transceiver wireless signal.

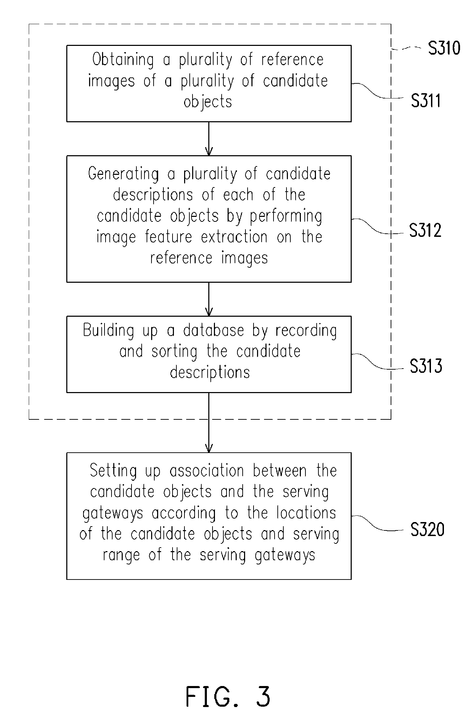

Referring to FIG. 3, FIG. 3 is a flowchart illustrating an offline database building method according to an embodiment of the present disclosure. The method proposed in FIG. 3 may be implemented by the D2D relay gateway system 10 of FIG. 1A, so as to recognize a target object based on the query image. Detailed steps of the method are described below with reference to each element depicted in FIG. 1A.

In step S310, the controller 230 builds a database by using a plurality of reference images of a plurality of candidate objects. In this embodiment, step S310 may be further divided into sub-step S311 to sub-step S313. In step S311, the controller 230 may obtain the reference images of a plurality of candidate objects. In detail, each of the candidate objects may be photographed from different shooting angles or in different environment conditions (such as intensity of ambient light, etc.), and at least one reference image related to each of the candidate objects may be captured. Further, each of the reference images may be indexed to have an image index. In step S312, the controller 230 may generate a plurality of candidate descriptions of each of the candidate objects by performing image feature extraction on the reference images. For instance, through using an image feature capturing algorithm and an image representation algorithm, the controller 230 may capture features from the reference images and convert the captured features into a plurality of descriptions, which may be a series of numbers. The image representation algorithm is, for example, an Invariant Zernike Moment algorithm, but the disclosure is not limited thereto. That is, the candidate descriptions of each of the reference images of each of the candidate objects are generated in advance for building up the database.

Therefore, in step S313, the controller 230 may build up the database by recording and sorting the candidate descriptions. In step S320, the controller 230 may set up association between the candidate objects and the serving gateways 101 to 109 according to the locations of the candidate objects and serving range of the serving gateways 101 to 109. Specifically, the controller 230 may check the location of each of the candidate objects and the location of each of the serving gateways 101 to 109. In the disclosure, one of the candidate objects is associated with one of the serving gateways 101 to 109, if the location of the one of the candidate objects locates within the serving range of the one of the serving gateways 101 to 109. In one embodiment, a location oriented table may be generated for recoding the association between the candidate objects and the serving gateways 101 to 109. However, the forgoing description takes the controller 230 building the database as example, but the disclosure is not limited thereto. In one embodiment, another computing apparatus may perform the step S310 (including step S311 to step S313) to the step S320 to build up the database, and the database then may be stored into the serving gateway 101 to 109 via other data transmission interface.

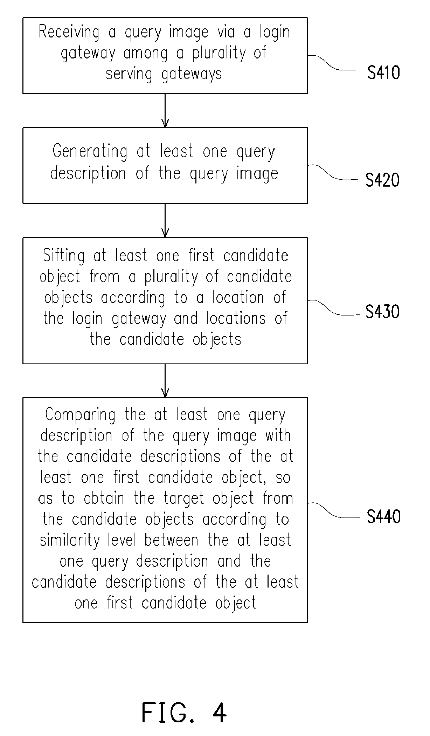

Referring to FIG. 4, FIG. 4 is a flowchart illustrating an information query method based on user location according to an embodiment of the present disclosure. The method proposed in FIG. 4 may be implemented by the D2D relay gateway system 10 of FIG. 1A, so as to recognize a target object based on the query image. Detailed steps of the method are described below with reference to each element depicted in FIG. 1A. Further, in order to facilitate in describing the spirit of the present disclosure more clearly, the serving gateway 105 is regarded as a central gateway and the serving gateway 107 is regarded as a login gateway corresponding to the user equipment 211. Based on aforesaid mechanism, the other embodiments about regarding other serving gateways as the login gateway and the central gateway should be deduced accordingly.

In step S410, the controller 230 may receive a query image via a login gateway 107 among a plurality of serving gateways 101 to 109. In step S420, the controller 230 may generate at least one query description of the query image. In the embodiment, the login gateway 107 receives login information and the query image from a user equipment 211 and transmits the query image to the controller 230 via the serving gateway 104 or the serving gateway 108.

According to the login location of the user equipment 211, it is highly possible that one of the candidate objects associated with the login gateway 107 is the target object that the user attend to query. Hence, in step S430, at least one of the serving gateways 101 to 109 (for example, login gateway 107) may sift at least one first candidate object from the candidate objects according to a location of the login gateway 107 and locations of the candidate objects.

In step S440, at least one of the serving gateways 101 to 109 compares the at least one query description of the query image with the candidate descriptions of the at least one first candidate object, so as to obtain the target object from the candidate objects according to similarity level between the at least one query description and the candidate descriptions of the at least one first candidate object.

In should be noted that, since the association between the serving gateways 101 to 109 and the candidate objects is able to be obtained, the candidate objects within the service range of the login gateway 107 are also marked by the login gateway 107. In one embodiment, the database may be divided into a plurality of sub-databases according to the category of the candidate objects. That is, each of the sub-databases is corresponding to one of the candidate objects for respectively recording the candidate descriptions of each of the candidate objects, and the candidate descriptions of each of the candidate objects are indexed to correspond to a specific description index. Each of the serving gateways 101 to 109 determine attributes of the sub-databases of the database as tagged or non-tagged according to the locations of the candidate objects and the serving range of the serving gateways 101 to 109.

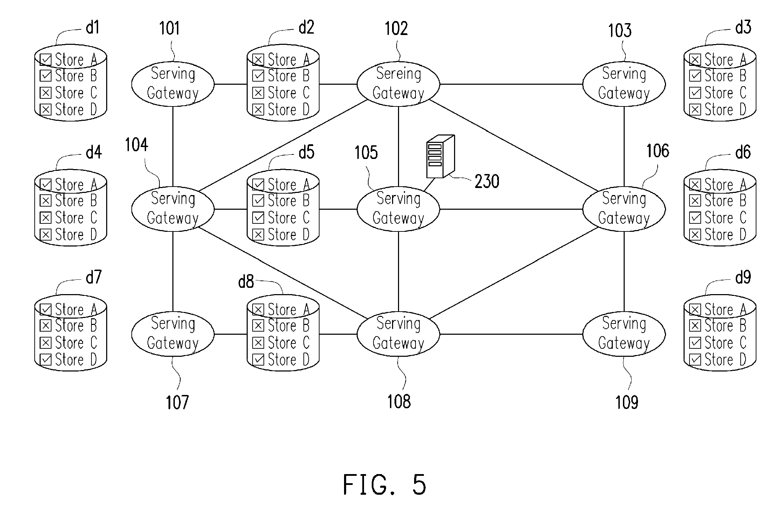

For example, referring to FIG. 5, FIG. 5 is a schematic diagram illustrating setting association between the candidate objects and the serving gateways according to an embodiment of the present disclosure. Assuming 'Store A' , 'Store B' , 'Store C' and 'Store D' are candidate objects in the exemplary, the association between the candidate objects and the serving gateways 101 to 109 are set as shown in FIG. 5. In detail, the serving gateways 101 to 109 respectively store the databases d1 to d9. Actually, each of the databases d1 to d9 recorded the same data including the candidate descriptions, but the sub-databases of the databases d1 to d9 may be tagged or non-tagged in different serving gateways 101 to 109.

As one example, according to the locations of the candidate objects 'Store A' , 'Store B' , 'Store C' and 'Store D' and the serving range of the serving gateways 101, the serving gateways 101 may determine the attribute of the sub-databases corresponding to 'Store A' and 'Store B' of the databases d1 as tagged and determine the attribute of the sub-databases corresponding to 'Store C' and 'Store D' of the databases d1 as non-tagged. Similarly, according to the locations of the candidate objects 'Store A' , 'Store B' , 'Store C' and 'Store D' and the serving range of the login gateway 107, the login gateway 107 may determine the attribute of the sub-databases corresponding to 'Store A' and 'Store D' of the databases d1 as tagged and determine the attribute of the sub-databases corresponding to 'Store B' and 'Store C' of the databases d1 as non-tagged. Hence, in one of the embodiments shown in FIG.5, each of the serving gateways 101 to 109 may determine at least one first candidate object from the candidate objects according to whether the sub-databases in each of the serving gateway 101 to 109 are tagged or non-tagged.

Further, in another one of the embodiments shown in FIG.5, each of the serving gateways 101 to 109 may determine at least one first candidate object from the candidate objects according to whether the sub-databases in the login gateway 107 are tagged or non-tagged. Specifically, the serving gateways 101 to 109 may recognize the at least one first candidate object from the candidate objects according to whether the sub-databases stored in the login gateway 107 are set up as tagged or non-tagged, wherein the sub-databases corresponding to the at least one first candidate object are set as tagged. In this case, each of the candidate descriptions in the database corresponds to one of the description indexes which are different from each other. Hence, the login gateway 107 may instruct the other serving gateways to compare the at least one query description with the candidate descriptions of the at least one first candidate objects by transmitting the description indexes.

In one embodiment, a location oriented table records the association between each of the serving gateways 101 to 109 and the candidate objects. The location oriented table is established by the controller 230. Specifically, the controller 230 may establish the location oriented table according to the locations of the candidate objects and the serving range of the serving gateways 101 to 109. In other embodiments, the location oriented table may be established in advance and then de stored in each of the serving gateways 101 to 109. Hence, the serving gateways 101 to 109 may inquire the location oriented table by using a gateway index of the login gateway 107, so as to recognize the at least one first candidate based on the location oriented table. Further, the serving gateways 101 to 109 may store the whole location oriented table or the serving gateways 101 to 109 may store part of the location oriented table, the disclosure is not limited thereto.

Except for determining at least one first candidate objects from all candidate objects based on the login gateway for image comparing, the information query method of the disclosure may allocate the query descriptions of the query image for different serving gateways, such that the different serving gateways may by responsible for comparing the different part of the query descriptions with the candidate descriptions of the first candidate objects.

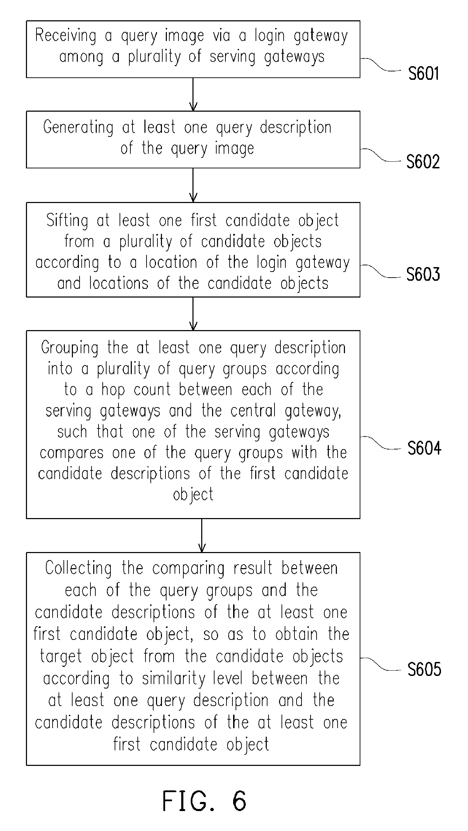

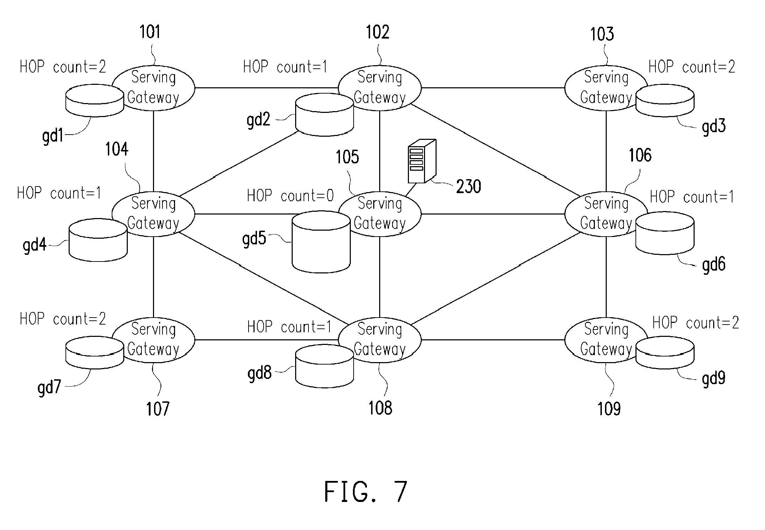

Referring to FIG. 6, FIG. 6 is a flowchart illustrating an information query method based on user location according to an embodiment of the present disclosure. The method proposed in FIG. 6 may be implemented by the D2D relay gateway system 10 of FIG. 7, so as to recognize a target object based on the query image. Detailed steps of the method are described below with reference to each element depicted in FIG. 7. Further, in order to facilitate in describing the spirit of the present disclosure more clearly, the serving gateway 105 is regarded as a central gateway and the serving gateway 107 is regarded as a login gateway. Based on aforesaid mechanism, the other embodiments about regarding other serving gateways as the login gateway and the central gateway should be deduced accordingly.

In step S601, the controller 230 may receive a query image via a login gateway 107 among a plurality of serving gateways 101 to 109. In step S602, the controller 230 may generate at least one query description of the query image. In step S603, the serving gateways 101 to 109 may sift at least one first candidate object from a plurality of candidate objects according to a location of the login gateway 107 and locations of the candidate objects. Since step S601 to step S603 are respectively similarly with step S410 to step S430, the details of step S601 to step S603 are not introduced here again. In step S604, the controller 230 may group the at least one query description into a plurality of query groups according to a hop count between each of the serving gateways 101 to 109 and the central gateway 105, such that one of the serving gateways 101 to 109 may compare one of the query groups with the candidate descriptions of the first candidate object.

The hop count between each of the serving gateways 101 to 109 and the central gateway 105 may be determined by the architecture of the D2D relay gateway system. For example, in FIG. 7, the hop count between the serving gateway 104 and the central gateway 105 is 1, which represents the central gateway 105 may establish D2D link directly with the serving gateway 104. Further, the hop count between the serving gateway 107 and the central gateway 105 is 2, which represents the serving gateway 107 may connect to the central gateway 105 via at least one other serving gateway in the D2D relay gateway system. Moreover, the hop count of the central gateway 105 is 0. Hence, the query descriptions are grouped into nine parts in this embodiment, but the disclosure is not limited thereto. In FIG. 7, the query descriptions generated by the controller 230 may be grouped into the query groups gd1 to gd9 according to the hop count of each of the serving gateways 101 to 109.

Specifically, the controller 230 may allocate query data size of each of the query groups gd1 to gd9 for the serving gateways 101 to 109, and each of the query groups gd1 to gd9 is assigned to one of the serving gateways 101 to 109 respectively. For example, the query group gd1 is assigned to the serving gateways 101, the query group gd7 is assigned to the login gateways 107, and the query group gd5 is assigned to the central gateways 105. Hence, the controller 230 may transmit part of the at least one query description in the one of the query groups gd1 to gd9 to the one of the serving gateways 101 to 109.

It should be noted that, the query data size allocated to the one of the serving gateways 101 to 109 decreases along with increase of the hop count of the one of the serving gateways 101 to 109. For example, since the hop count of the central gateway 105 is 0, the query data size of the query group gd5 is more than other query groups 101-104 and 106-109. Since the hop count of the serving gateway 104 is less than the serving gateway 101, the query data size of the query group gd4 is more than the query data size of the query group gd1.

Therefore, comparing with the transmission delay of transmitting the whole query descriptions to each of the serving gateways, the transmission delay for transmitting the query descriptions from the central gateway 105 may be reduced. In step S605, the controller 230 or one of the serving gateways 101 to 109 may collect the comparing result between each of the query groups gd1 to gd9 and the candidate descriptions of the at least one first candidate object, so as to obtain the target object from the candidate objects according to similarity level between the at least one query description and the candidate descriptions of the at least one first candidate object.

In one embodiment, the query data size being responsible by an i$^{th}$ serving gateway among the serving gateways is represented by formula (1)

$$q_i = \frac{N}{\sum_{i=1}^{g} \frac{1}{2^{\max(h_i, l_i)}}} \left( \frac{1}{2^{\max(h_i, l_i)}} \right) \qquad \text{Formula (1)}$$

,wherein g is the number of the serving gateways, $N$ is data amount of the at least one query description, $h_i$ is the hop count between the central gateway and the i$^{th}$ serving gateway, and $l_i$ is a loading factor of the i$^{th}$ serving gateway.

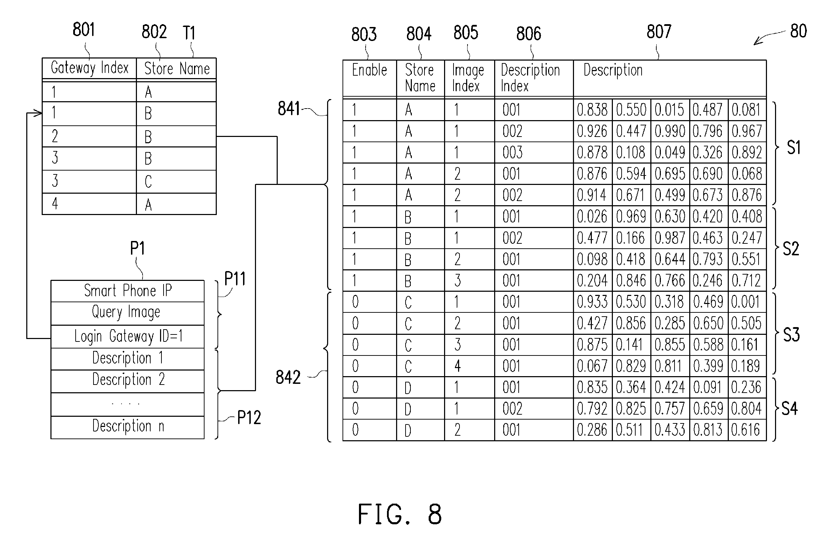

Referring to FIG. 8, FIG. 8 is a schematic diagram for querying a target object according to the query image based on the location oriented table according to an embodiment of the present disclosure. A database 80 is stored in a serving gateway indexed by 1, and the location oriented table T1 is also stores in the serving gateway indexed by 1. In this case, it is assumed the serving gateway indexed by 1 is a login gateway receiving a query image, so the data P11 including a smart phone IP, a query image and a login gateway ID are transmitted from the login gateway to the controller. The controller may receive the query image via the login gateway and generate query descriptions P12 of the query image through image feature extraction and creating descriptions of the captured features. Each of the query descriptions may includes a series of descriptors.

The controller may transmit the query package P1 to the serving gateway indexed by 1. Hence, the serving gateway indexed by 1 may inquire the location oriented table T1 by using the gateway index of the login gateway, which is the serving gateway indexed by 1. The field 801 of the location oriented table T1 records gateway indexes of the serving gateways, and the field 802 of the location oriented table T1 may record the candidate objects. It should be noted based on the location oriented table T1, the candidate objects 'Store A' and 'Store B' are located within the service range of the serving gateways indexed by 1; the candidate object 'Store B' is located within the service range of the serving gateways indexed by 2; the candidate objects 'Store B' and 'Store C' are located within the service range of the serving gateways indexed by 3; and the candidate object 'Store A' is located within the service range of the serving gateways indexed by 4.

Hence, when the serving gateway indexed by 1 inquires the location oriented table T1 by using the gateway index '1' , the first candidate objects 'Store A' and 'Store B' are shifted for all the candidate objects. The serving gateway indexed by 1 than may compare the query descriptions P12 of the query image with the candidate descriptions 841 of the first candidate objects 'Store A' and 'Store B' . On the other words, only the sub-database S1 and S2 may be used by the serving gateway indexed by 1. On the contrary, the candidate descriptions 842 of the second candidate objects 'Store C' and 'Store D' are labelled as '0' in the field 803, and the sub-database S3 and S4 may not be used by the serving gateway indexed by 1. In this case, the values of the field 803 may be set up according to the location oriented table T1, but the disclosure is not limited thereto. In one embodiment, the values of the field 803 may be set up in advance according to the locations of the serving gateways and the locations of the candidate objects.

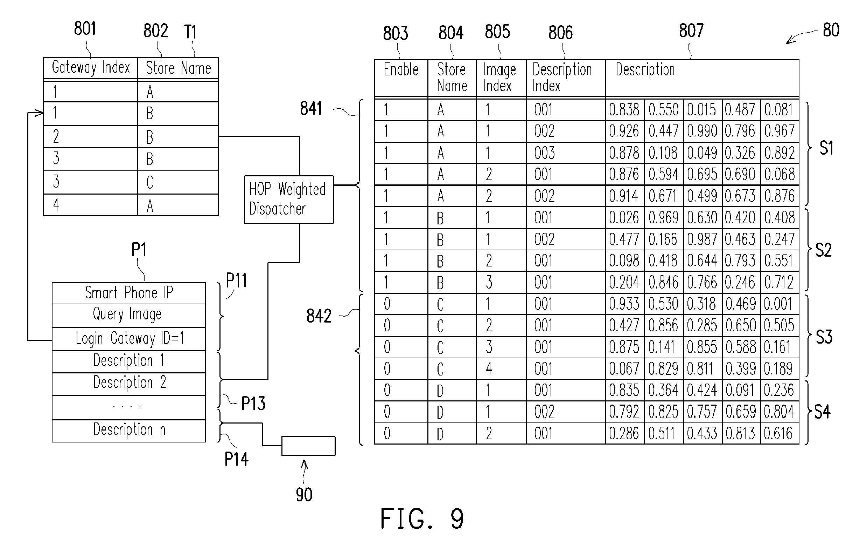

Referring to FIG. 9, FIG. 9 is a schematic diagram for querying a target object according to the query image based on the location oriented table according to an embodiment of the present disclosure. A database 80 is stored in a serving gateway indexed by 1, and the location oriented table T1 is also stores in the serving gateway indexed by 1. In this case, it is assumed the serving gateway indexed by 1 is a login gateway receiving a query image, so the data P11 including a smart phone IP, a query image and a login gateway ID are transmitted from the login gateway indexed by 1 to the controller. The controller may receive the query image via the login gateway and generate query descriptions P13 and P 14 of the query image through image feature extraction and creating descriptions of the captured features. Each of the query descriptions may includes a series of descriptors.

In the case shown in FIG. 9, the controller may group the query descriptions into two query groups P13 and P14 according to the hop count of the serving gateway indexed by 1 and the hop count of the serving gateway indexed by 2. The controller may transmit the gateway index of the login gateway and the query groups P13 to the serving gateway indexed by 1, and the controller may transmit the gateway index of the login gateway and the query groups P14 to the serving gateway indexed by 2. Therefore, the serving gateway indexed by 1 may compare the query descriptions of the query groups P13 with the candidate descriptions 841 of the database 80, and the serving gateway indexed by 2 may compare the query descriptions of the query groups P14 with the candidate descriptions of the database 90. Hence, the computing loading of the image recognizing may be distributed and the task of comparing the massive amount of the candidate descriptions with the query descriptions may be parallel executed.

In one embodiment, each of the serving gateways may compare part of the candidate descriptions of the at least one first candidate object with the at least one query description according to a loading status of the serving gateways. The loading status comprises a gateway connect loading of the serving gateways, a CPU loading of the serving gateways, an average transmission delay of the serving gateways or an average computer delay of the serving gateways.

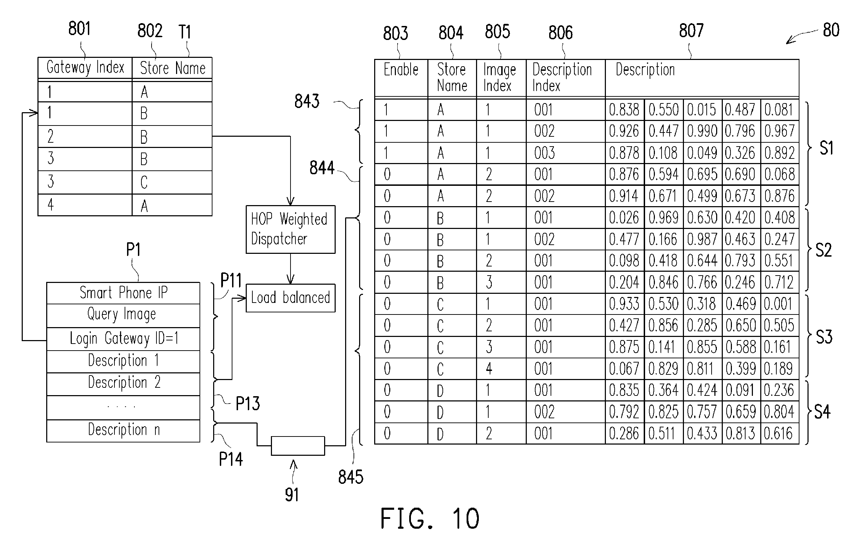

Referring to FIG. 10, FIG. 10 is a schematic diagram for querying a target object according to the query image based on the location oriented table according to an embodiment of the present disclosure. Similar with the case shown in FIG. 9, the query descriptions are grouped into two query groups, which are respectively transmitted to the serving gateway indexed by1 and the serving gateway indexed by 2. Additionally, depending on the loading status of the serving gateways, the amount of the candidate descriptions may be adjusted. In the case shown in FIG. 10, the serving gateway indexed by 1 may compare the candidate descriptions 843 with the query descriptions of the query group P13, and the serving gateway indexed by 1 may compare the candidate descriptions 844 in the database 91 with the query descriptions of the query group P 14.

Base on above, it may be known that, the serving gateways may query the database based on the location of the login gateway. If the user equipment takes a photo at location A but the user equipment login the D2D relay gateway system at location B, the information query via the D2D relay gateway system may be failed. Hence, in one embodiment, if the target object is not queried, one of the serving gateways may re-compare the at least one query description with all the candidate descriptions of the candidate objects in the database, so as to obtain the proper query result. Besides, if the target object is not queried, one of the serving gateways may accumulate a failure time. If the failure time is greater than a threshold, one of the serving gateways may update association between the candidate objects and the login gateway in the location oriented table, or re-set up attribute of the sub-databases of the database of the serving gateways.

Specifically, the serving gateways may auto-modify the location oriented table by adding the association between the serving gateways and the candidate objects or by deleting the association between the serving gateways and the candidate objects. For example, table 1 shown below is the original location oriented table, and the table 1 is modified by revising the association between the serving gateway indexed by 3 and the candidate object 'Store C' to generate table 2, but the disclosure is not limited thereto.

Table 1

| Gateway Index | Store Name |
| --- | --- |
| 1 | A |
| 1 | B |

(continued)

| Gateway Index | Store Name |
| --- | --- |
| 2 | B |
| 3 | B |
| 3 | C |
| 4 | A |

Table 2

| Gateway Index | Store Name |
| --- | --- |
| 1 | A |
| 1 | B |
| 1 | C |
| 2 | B |
| 3 | B |
| 4 | A |

In summary, according to the method proposed by the present disclosure, the processing time for image recognizing by comparing the massive data in data base with the query image may be decreased. Besides, computing loading of image recognition is allocated to the plurality of serving gateways, such that transmission delay caused by data transmission may be reduced.

**Claims**

1. An information querying method based on user location, adapted to a device to device relay gateway system comprising a plurality of serving gateways (101~117) and configured to recognize a target object based on a query image, and comprising:

   receiving (S410, S601) the query image via a login gateway among the serving gateways (101~117);
   generating (S420, S602) at least one query description (P12) of the query image;
   sifting (S430, S603) at least one first candidate object from a plurality of candidate objects according to a location of the login gateway and locations of the candidate objects, wherein a plurality of candidate descriptions (841~845) of each of the candidate objects are recorded in a database (1052a, d1~d9); and
   comparing (S440) the at least one query description (P12) of the query image with the candidate descriptions (841~845) of the at least one first candidate object, so as to obtain the target object from the candidate objects according to similarity level between the at least one query description (P12) and the candidate descriptions (841~845) of the at least one first candidate object.

2. The information querying method as claimed in claim 1, wherein the login gateway receives login information and the query image from a user equipment (210, 211) and transmits the query image.

3. The information querying method as claimed in claim 1, wherein the serving gateways (101~107) connect with each other to form a network topology based on a wireless communication protocol, and each of the serving gateways (101~107) stores the database (1052a, d1~d9).

4. The information querying method as claimed in claim 1, further comprising:

   Building (S310) the database (1052a, d1~d9) by using a plurality of reference images of the candidate objects; and
   setting up (S320) association between the candidate objects and the serving gateways (101~107) according to the locations of the candidate objects and serving range of the serving gateways (101~107).

5. The information querying method as claimed in claim 4, wherein the step of setting up the association between the candidate objects and the serving gateways (101~107) according to the locations of the candidate objects and the serving range of the serving gateways (101~107) comprises:

determining attribute of a plurality of sub-databases (S1~S4) of the database (1052a, d1~d9) as tagged or non-tagged according to the locations of the candidate objects and the serving range of the serving gateways (101~107), wherein each of the sub-databases (S1~S4) is corresponding to one of the candidate objects for respectively recording the candidate descriptions (841~845) of each of the candidate objects.

6. The information querying method as claimed in claim 5, wherein the step of sifting the at least one first candidate object from the candidate objects according to the location of the login gateway and the locations of the candidate objects comprises:

recognizing the at least one first candidate object from the candidate objects according to whether the sub-databases (S1~S4) stored in the login gateway are set up as tagged or non-tagged, wherein the sub-databases (S1~S4) corresponding to the at least one first candidate object are set as tagged.

7. The information querying method as claimed in claim 4, wherein the step of setting up the association between the candidate objects and the serving gateways (101~107) according to the locations of the candidate objects and the serving range of the serving gateways (101~107) comprises:

establishing a location oriented table (T1) according to the locations of the candidate objects and the serving range of the serving gateways (101~107), wherein the location oriented table (T1) records the association between each of the serving gateways (101~107) and the candidate objects, and one of the candidate objects is associated with one of serving gateways (101~107) if the location of the one of the candidate objects locates within the serving range of the one of serving gateways (101~107).

8. The information querying method as claimed in claim 7, wherein the step of sifting the at least one first candidate object from the candidate objects according to the location of the login gateway and the locations of the candidate objects comprises:

inquiring the location oriented table (T1) by using a gateway index of the login gateway, so as to recognize the at least one first candidate based on the location oriented table (T1).

9. The information querying method as claimed in claim 1, wherein each of the candidate descriptions (841~845) in the database (1052a, d1~d9) corresponds to one of a plurality of description indexes which are different from each other, and the method further comprises:

instructing the serving gateways (101~107) to compare the at least one query description (P12) with the candidate descriptions (841~845) of the at least one first candidate objects by transmitting the description indexes.

10. The information querying method as claimed in claim 1, wherein a central gateway among the serving gateways (101~107) is connected to a controller (230, 240), and the step of comparing the at least one query description (P12) of the query image with the candidate descriptions (841~845) of the at least one first candidate object comprises:

grouping (S604) the at least one query description (P12) into a plurality of query groups (gd1~gd9, P13, P14) according to a hop count between each of the serving gateways (101~107) and the central gateway, such that one of the serving gateways (101~107) compares one of the query groups (gd1~gd9, P13, P14) with the candidate descriptions (841~845) of the first candidate object.

11. The information querying method as claimed in claim 10, wherein the step of grouping the at least one query description (P12) into the query groups (gd1~gd9, P13, P14) comprises:

allocating query data size of each of the query groups (gd1~gd9, P13, P14) for the serving gateways (101~107), and transmitting part of the at least one query description (P12) in the one of the query groups (gd1~gd9, P13, P14) to the one of the serving gateways (101~107), wherein the query data size allocated to the one of the serving gateways (101~107) decreases along with increase of the hop count of the one of the serving gateways (101~107).

12. The information querying method as claimed in claim 11, wherein the query data size being responsible by an $i^{th}$ serving gateway among the serving gateways (101~107) is represented by:

$$q_i = \frac{N}{\sum_{i=1}^{g} \frac{1}{2^{\max(h_i, l_i)}}} \left( \frac{1}{2^{\max(h_i, l_i)}} \right)$$

,wherein g is the number of the serving gateways (101~107), $N$ is data amount of the at least one query description (P12), $h_i$ is the HOP count between the central gateway and the $i^{th}$ serving gateway, and $l_i$ is a loading factor of the $i^{th}$ serving gateway.

13. The information querying method as claimed in claim 1, wherein the step of comparing the at least one query description (P12) of the query image with the candidate descriptions (841~845) of the at least one first candidate object comprises:

for each of the serving gateways (101~107), comparing part of the candidate descriptions (841~845) of the at least one first candidate object with the at least one query description (P12) according to a loading status of the serving gateways (101~107), wherein the loading status comprises a gateway connect loading of the serving gateways (101~107), a CPU loading of the serving gateways (101~107), an average transmission delay of the serving gateways (101~107) or an average computer delay of the serving gateways (101~107).

14. The information querying method as claimed in claim 1, further comprising:

if the target object is not queried, re-comparing the at least one query description (P12) with all the candidate descriptions (841~845) of the candidate objects in the database (1052a, d1~d9) and accumulating a failure time; and
if the failure time is greater than a threshold, updating association between the candidate objects and the login gateway in a location oriented table (T1), or re-setting up attribute of a plurality of sub-databases (S1~S4) of the database (1052a, d1~d9) of the login gateway.

15. A device to device (D2D) relay gateway system, configured to recognize a target object based on a query image and comprising:

a plurality of serving gateways (101~107), connected with each other to form a network topology based on a wireless communication protocol, and respectively storing a database (1052a, d1~d9); and
a controller (230, 240), connected to a central gateway among the serving gateways (101~107), receiving the query image via a login gateway among the serving gateways (101~107), and generating at least one query description (P12) of the query image,
wherein at least one of the serving gateways (101~107) sifts at least one first candidate object from a plurality of candidate objects according to a location of the login gateway and locations of candidate objects, wherein a plurality of candidate descriptions (841~845) of each of the candidate objects are recorded in the database (1052a, d1~d9),
wherein the serving gateways (101~107) compare the at least one query description (P12) of the query image with the candidate descriptions (841~845) of the at least one first candidate object, so as to obtain the target object from the candidate objects according to similarity level between the at least one query description (P12) and the candidate descriptions (841~845) of the at least one first candidate object.

16. The D2D relay gateway system as claimed in claim 15, wherein the login gateway receives login information and the query image from a user equipment (210, 211) and transmits the query image.

17. The D2D relay gateway system as claimed in claim 15, wherein the controller (230, 240) builds the database (1052a, d1~d9) by using a plurality of reference images of the candidate objects,
wherein the controller (230, 240) sets up association between the candidate objects and the serving gateways (101~107) according to the locations of the candidate objects and serving range of the serving gateways (101~107).

18. The D2D relay gateway system as claimed in claim 15, wherein the serving gateways (101~107) determine attribute of a plurality of sub-databases (S1~S4) of the database (1052a, d1~d9) as tagged or non-tagged according to the locations of the candidate objects and the serving range of the serving gateways (101~107), wherein each of the sub-databases (S1~S4) is corresponding to one of the candidate objects for respectively recording the candidate descriptions (841~845) of each of the candidate objects.

19. The D2D relay gateway system as claimed in claim 18, wherein the login gateway recognizes the at least one first candidate object from the candidate objects according to whether the sub-databases (S1~S4) stored in the login gateway are set up as tagged or non-tagged, wherein the sub-databases (S1~S4) corresponding to the at least one first candidate object are set as tagged.

20. The D2D relay gateway system as claimed in claim 15, wherein the serving gateways (101~107) inquire a location oriented table (T1) by using a gateway index of the login gateway, so as to recognize the at least one first candidate based on the location oriented table (T1).

21. The D2D relay gateway system as claimed in claim 20, wherein the location oriented table (T1) records the association between each of the serving gateways (101~107) and the candidate objects, and one of the candidate objects is associated with one of serving gateways (101~107) if the location of the one of the candidate objects locates within the serving range of the one of serving gateways (101~107).

22. The D2D relay gateway system as claimed in claim 15, wherein one of the serving gateways (101~107) instruct the other one of the serving gateways (101~107) to compare the at least one query description (P12) with the candidate descriptions (841~845) of the at least one first candidate objects by transmitting the description indexes.

23. The D2D relay gateway system as claimed in claim 15, wherein the controller (230, 240) groups the at least one query description (P12) into a plurality of query groups (gd1~gd9, P13, P14) according to a hop count between each of the serving gateways (101~107) and the central gateway, such that one of the serving gateways (101~107) compares one of the query groups (gd1~gd9, P13, P14) with the candidate descriptions (841~845) of the first candidate object.

24. The D2D relay gateway system as claimed in claim 23, wherein the controller (230, 240) allocates query data size of each of the query groups (gd1~gd9, P13, P14) for the serving gateways (101~107), and transmits part of the at least one query description (P12) in the one of the query groups (gd1~gd9, P13, P14) to the one of the serving gateways (101~107), wherein the query data size allocated to the one of the serving gateways (101~107) decreases along with increase of the hop count of the one of the serving gateways.

25. The D2D relay gateway system as claimed in claim 24, wherein the query data size being responsible by an $i^{th}$ serving gateway among the serving gateways (101~107) is represented by:

$$q_i = \frac{N}{\sum_{i=1}^{g} \frac{1}{2^{\max(h_i, l_i)}}} \left( \frac{1}{2^{\max(h_i, l_i)}} \right)$$

,wherein g is the number of the serving gateways (101~107), $N$ is data amount of the at least one query description (P12), $h_i$ is the HOP count between the central gateway and the $i^{th}$ serving gateway, and $l_i$ is a loading factor of the $i^{th}$ serving gateway.

26. The D2D relay gateway system as claimed in claim 15, wherein the controller (230, 240) instructs the serving gateways (101~107) to compare part of the candidate descriptions (841~845) of the at least one first candidate object with the at least one query description (P12) according to a loading status of the serving gateways (101~107), wherein the loading status comprises a gateway connect loading of the serving gateways (101~107), a CPU loading of the serving gateways (101~107), an average transmission delay of the serving gateways (101~107) or an average computer delay of the serving gateways (101~107).

**27.** The D2D relay gateway system as claimed in claim 15, wherein if the target object is not queried, one of the serving gateways (101~107) re-compares the at least one query description (P12) with all the candidate descriptions (841~845) of the candidate objects in the database (1052a, d1~d9) and the controller (230, 240) accumulates a failure time,
wherein if the failure time is greater than a threshold, the serving gateways (101~107) update association between the candidate objects and the login gateway in a location oriented table (T1), or re-set up attribute of a plurality of sub-databases (S1~S4) of the database (1052a, d1~d9) of the login gateway.

**28.** A controller, configured in a device to device (D2D) relay gateway system comprising a plurality of serving gateways (101~107), connected to a central gateway among the serving gateways (101~107), and comprising:

a storage unit (232), storing a plurality of instructions (232a); and
a processing unit (231), connected to the storage unit, and accessing and executing the instructions (232a) to:

receive a query image via a login gateway among the serving gateways (101~107), and generate at least one query description (P12) of the query image; and
group the at least one query description (P12) into a plurality of query groups (gd1~gd9, P13, P14) according to a hop count between each of the serving gateways (101~107) and the central gateway, such that one of the serving gateways (101~107) compares one of the query groups (gd1~gd9, P13, P14) with the candidate descriptions (841~845) of the first candidate object.

**29.** The controller as claimed in claim 28, wherein the processing unit (231) accesses and executes the instructions to:

allocate query data size of each of the query groups (gd1~gd9, P13, P14) for the serving gateways (101~107), and transmitting part of the at least one query description (P12) in the one of the query groups (gd1~gd9, P13, P14) to the one of the serving gateways (101~107), wherein the query data size allocated to the one of the serving gateways (101~107) decreases along with increase of the hop count of the one of the serving gateways (101~107).

**30.** The controller as claimed in claim 29, wherein the query data size being responsible by an $i^{th}$ serving gateway among the serving gateways (101~107) is represented by:

$$q_i = \frac{N}{\sum_{i=1}^{g} \frac{1}{2^{\max(h_i, l_i)}}} \left( \frac{1}{2^{\max(h_i, l_i)}} \right)$$

,wherein g is the number of the serving gateways (101~107), $N$ is data amount of the at least one query description (P12), $h_i$ is the HOP count between the central gateway and the $i^{th}$ serving gateway, and $l_i$ is a loading factor of the $i^{th}$ serving gateway.

**31.** The controller as claimed in claim 28, wherein the processing unit (231) accesses and executes the instructions to:

instruct the serving gateways (101~107) to compare part of the candidate descriptions (841~845) of the at least one first candidate object with the at least one query description (P 12) according to a loading status of the serving gateways (101~107), wherein the loading status comprises a gateway connect loading of the serving gateways (101~107), a CPU loading of the serving gateways (101~107), an average transmission delay of the serving gateways (101~107) or an average computer delay of the serving gateways (101~107).

**32.** The controller as claimed in claim 28, wherein the processing unit (231) accesses and executes the instructions to:

build the database (1052a, d1~d9) by using a plurality of reference images of the candidate objects, and set up association between the candidate objects and the serving gateways (101~107) according to the locations of the candidate objects and serving range of the serving gateways (101~107).

EP 3 177 044 A2

FIG. 1A

FIG. 1B

14

FIG. 2

Obtaining a plurality of reference images of a plurality of candidate objects — S310

S311

Generating a plurality of candidate descriptions of each of the candidate objects by performing image feature extraction on the reference images — S312

Building up a database by recording and sorting the candidate descriptions — S313

Setting up association between the candidate objects and the serving gateways according to the locations of the candidate objects and serving range of the serving gateways — S320

FIG. 3

Receiving a query image via a login
gateway among a plurality of
serving gateways — S410

Generating at least one query
description of the query image — S420

Sifting at least one first candidate
object from a plurality of candidate
objects according to a location of
the login gateway and locations of
the candidate objects — S430

Comparing the at least one query
description of the query image with
the candidate descriptions of the at
least one first candidate object, so
as to obtain the target object from
the candidate objects according to
similarity level between the at least
one query description and the
candidate descriptions of the at least
one first candidate object — S440

FIG. 4

FIG. 5

Receiving a query image via a login gateway
among a plurality of serving gateways ⎯ S601

Generating at least one query description
of the query image ⎯ S602

Sifting at least one first candidate object
from a plurality of candidate objects
according to a location of the login gateway
and locations of the candidate objects ⎯ S603

Grouping the at least one query description
into a plurality of query groups according
to a hop count between each of the
serving gateways and the central gateway,
such that one of the serving gateways
compares one of the query groups with the
candidate descriptions of the first candidate
object ⎯ S604

Collecting the comparing result between
each of the query groups and the
candidate descriptions of the at least one
first candidate object, so as to obtain the
target object from the candidate objects
according to similarity level between the
at least one query description and the
candidate descriptions of the at least one
first candidate object ⎯ S605

FIG. 6

FIG. 7

EP 3 177 044 A2

**T1**

| Gateway Index (801) | Store Name (802) |
|---|---|
| 1 | A |
| 1 | B |
| 2 | B |
| 3 | B |
| 3 | C |
| 4 | A |

**P1**

| |
|---|
| Smart Phone IP |
| Query Image |
| Login Gateway ID=1 |
| Description 1 |
| Description 2 |
| . . . . |
| Description n |

P11
P12

841
842

**80**

| Enable (803) | Store Name (804) | Image Index (805) | Description Index (806) | Description (807) | | | | | |
|---|---|---|---|---|---|---|---|---|---|
| 1 | A | 1 | 001 | 0.838 | 0.550 | 0.015 | 0.487 | 0.081 | S1 |
| 1 | A | 1 | 002 | 0.926 | 0.447 | 0.990 | 0.796 | 0.967 | |
| 1 | A | 1 | 003 | 0.878 | 0.108 | 0.049 | 0.326 | 0.892 | |
| 1 | A | 2 | 001 | 0.876 | 0.594 | 0.695 | 0.690 | 0.068 | |
| 1 | A | 2 | 002 | 0.914 | 0.671 | 0.499 | 0.673 | 0.876 | |
| 1 | B | 1 | 001 | 0.026 | 0.969 | 0.630 | 0.420 | 0.408 | S2 |
| 1 | B | 1 | 002 | 0.477 | 0.166 | 0.987 | 0.463 | 0.247 | |
| 1 | B | 2 | 001 | 0.098 | 0.418 | 0.644 | 0.793 | 0.551 | |
| 1 | B | 3 | 001 | 0.204 | 0.846 | 0.766 | 0.246 | 0.712 | |
| 0 | C | 1 | 001 | 0.933 | 0.530 | 0.318 | 0.469 | 0.001 | S3 |
| 0 | C | 2 | 001 | 0.427 | 0.856 | 0.285 | 0.650 | 0.505 | |
| 0 | C | 3 | 001 | 0.875 | 0.141 | 0.855 | 0.588 | 0.161 | |
| 0 | C | 4 | 001 | 0.067 | 0.829 | 0.811 | 0.399 | 0.189 | |
| 0 | D | 1 | 001 | 0.835 | 0.364 | 0.424 | 0.091 | 0.236 | S4 |
| 0 | D | 1 | 002 | 0.792 | 0.825 | 0.757 | 0.659 | 0.804 | |
| 0 | D | 2 | 001 | 0.286 | 0.511 | 0.433 | 0.813 | 0.616 | |

FIG. 8

T1

| Gateway Index (801) | Store Name (802) |
|---|---|
| 1 | A |
| 1 | B |
| 2 | B |
| 3 | B |
| 3 | C |
| 4 | A |

P1

| |
|---|
| Smart Phone IP |
| Query Image |
| Login Gateway ID=1 |
| Description 1 |
| Description 2 |
| . . . . |
| Description n |

HOP Weighted Dispatcher

841  842  P11  P13  P14  90

80

| Enable (803) | Store Name (804) | Image Index (805) | Description Index (806) | Description (807) | | | | | |
|---|---|---|---|---|---|---|---|---|---|
| 1 | A | 1 | 001 | 0.838 | 0.550 | 0.015 | 0.487 | 0.081 | S1 |
| 1 | A | 1 | 002 | 0.926 | 0.447 | 0.990 | 0.796 | 0.967 | |
| 1 | A | 1 | 003 | 0.878 | 0.108 | 0.049 | 0.326 | 0.892 | |
| 1 | A | 2 | 001 | 0.876 | 0.594 | 0.695 | 0.690 | 0.068 | |
| 1 | A | 2 | 002 | 0.914 | 0.671 | 0.499 | 0.673 | 0.876 | |
| 1 | B | 1 | 001 | 0.026 | 0.969 | 0.630 | 0.420 | 0.408 | S2 |
| 1 | B | 1 | 002 | 0.477 | 0.166 | 0.987 | 0.463 | 0.247 | |
| 1 | B | 2 | 001 | 0.098 | 0.418 | 0.644 | 0.793 | 0.551 | |
| 1 | B | 3 | 001 | 0.204 | 0.846 | 0.766 | 0.246 | 0.712 | |
| 0 | C | 1 | 001 | 0.933 | 0.530 | 0.318 | 0.469 | 0.001 | S3 |
| 0 | C | 2 | 001 | 0.427 | 0.856 | 0.285 | 0.650 | 0.505 | |
| 0 | C | 3 | 001 | 0.875 | 0.141 | 0.855 | 0.588 | 0.161 | |
| 0 | C | 4 | 001 | 0.067 | 0.829 | 0.811 | 0.399 | 0.189 | |
| 0 | D | 1 | 001 | 0.835 | 0.364 | 0.424 | 0.091 | 0.236 | S4 |
| 0 | D | 1 | 002 | 0.792 | 0.825 | 0.757 | 0.659 | 0.804 | |
| 0 | D | 2 | 001 | 0.286 | 0.511 | 0.433 | 0.813 | 0.616 | |

FIG. 9

801 Gateway Index  802 Store Name  T1

| Gateway Index | Store Name |
|---|---|
| 1 | A |
| 1 | B |
| 2 | B |
| 3 | B |
| 3 | C |
| 4 | A |

P1

| Smart Phone IP |
|---|
| Query Image |
| Login Gateway ID=1 |
| Description 1 |
| Description 2 |
| . . . . |
| Description n |

P11  P13  P14

HOP Weighted Dispatcher

Load balanced

843  844  845  91

803  804  805  806  807  80

| Enable | Store Name | Image Index | Description Index | Description | | | | | |
|---|---|---|---|---|---|---|---|---|---|
| 1 | A | 1 | 001 | 0.838 | 0.550 | 0.015 | 0.487 | 0.081 | S1 |
| 1 | A | 1 | 002 | 0.926 | 0.447 | 0.990 | 0.796 | 0.967 | |
| 1 | A | 1 | 003 | 0.878 | 0.108 | 0.049 | 0.326 | 0.892 | |
| 0 | A | 2 | 001 | 0.876 | 0.594 | 0.695 | 0.690 | 0.068 | |
| 0 | A | 2 | 002 | 0.914 | 0.671 | 0.499 | 0.673 | 0.876 | |
| 0 | B | 1 | 001 | 0.026 | 0.969 | 0.630 | 0.420 | 0.408 | S2 |
| 0 | B | 1 | 002 | 0.477 | 0.166 | 0.987 | 0.463 | 0.247 | |
| 0 | B | 2 | 001 | 0.098 | 0.418 | 0.644 | 0.793 | 0.551 | |
| 0 | B | 3 | 001 | 0.204 | 0.846 | 0.766 | 0.246 | 0.712 | |
| 0 | C | 1 | 001 | 0.933 | 0.530 | 0.318 | 0.469 | 0.001 | S3 |
| 0 | C | 2 | 001 | 0.427 | 0.856 | 0.285 | 0.650 | 0.505 | |
| 0 | C | 3 | 001 | 0.875 | 0.141 | 0.855 | 0.588 | 0.161 | |
| 0 | C | 4 | 001 | 0.067 | 0.829 | 0.811 | 0.399 | 0.189 | |
| 0 | D | 1 | 001 | 0.835 | 0.364 | 0.424 | 0.091 | 0.236 | S4 |
| 0 | D | 1 | 002 | 0.792 | 0.825 | 0.757 | 0.659 | 0.804 | |
| 0 | D | 2 | 001 | 0.286 | 0.511 | 0.433 | 0.813 | 0.616 | |

FIG. 10